# EUROPÄISCHE PATENTSCHRIFT

(11) **EP 1 331 475 B1**
(45) Veröffentlichungstag und Bekanntmachung des Hinweises auf die Patenterteilung: **02.08.2006**
(21) Anmeldenummer: 03001152.2
(22) Anmeldetag: 21.01.2003
(51) Int. Cl.: G01N 15/02, G01N 15/14

(54) **Verfahren und Vorrichtung zum Messen der Grössenverteilung und Konzentration von Partikeln in einem Fluid**
Method and device for measuring particle size distribution and concentration of particles in a fluid
Procédé et dispositif d'examination de la distribution des tailles et de la concentration de particules dans un fluide

(30) Priorität: 26.01.2002 DE 10202999
(43) Veröffentlichungstag der Anmeldung: 30.07.2003
(73) Patentinhaber: Palas GmbH Partikel-und Lasermesstechnik, 76229 Karlsruhe (DE)
(72) Erfinder: Mölter, Leander, 76744 Wörth (DE); Munzinger, Friedrich, 75053 Gondelsheim (DE)
(74) Vertreter: Lempert, Jost

(56) Entgegenhaltungen:
- EP-A- 0 791 817
- WO-A-86/07455
- US-A- 4 281 924

## Beschreibung

Die Erfindung betrifft ein Verfahren und eine Vorrichtung zum Messen von Eigenschaften von Partikeln in einem Fluid nach dem Oberbegriff der Ansprüche 1 bzw. 12.

Bei einem zu vermessenden Teilchenstrom in einem Fluid kann es sich um Feststoff- oder Flüssigkeitsteilchen handeln, die in einem Gas oder in einer anderen Flüssigkeit eingebettet sind und mit diesen bzw. dieser zusammen bewegt werden. Messungen dieser Art werden in der Regel ausgeführt, um die Teilchengrößenverteilung und die Teilchenkonzentration im Fluid zu bestimmen und kommen beispielsweise in der Raum- und Ablufttechnik sowie in der Medizintechnik zum Einsatz. Der Nachweis von Teilchen erfolgt mittels der von einem Teilchen auf einen Empfänger gestreuten Streulichtintensität, indem der Teilchenstrom mit geeigneter elektromagnetischen Strahlung im Bereich von infrarotem bis ultraviolettem Licht, vorzugsweise mit Weißlicht, bestrahlt wird. Ein Teil der Streustrahlung wird mittels eines Detektors nachgewiesen. Die interessierenden Teilcheneigenschaften werden über Zählimpulse bestimmt, die von einer dem Detektor nachgeschalteten geeigneten Auswertelektronik ausgewertet werden.

Die WO 86/07455 A zeigt ein Verfahren und eine Vorrichtung zur Ermittlung von Parametern, wie Partikelteilchen und Verteilung in Gasen, wobei Beleuchtungslicht mittels eines Hohlspiegels parallelisiert wird, der so erzeugte Parallelstrahl frei durch den Raum hindurch die Probe durchstrahlt und anschließend das Licht ebenfalls durch einen Hohlspiegel auf ein Spektrometer fokussiert wird.

Ähnliche Verfahren und Vorrichtungen sind aus der DE 196 12 569 C1 und der US 5,815,265 bekannt. Die DE 196 12 569 C1 offenbart zur Erhöhung des Dynamikbereichs beim Prüfen der Größenverteilung von Partikeln in Fluiden das Vorsehen von zwei aufeinander folgenden Messvolumina in einem fluiddurchströmten Messkanal. Die beiden Messvolumina werden mittels einer einzigen Lichtquelle beleuchtet, deren Strahlung mittels einer Anordnung aus zumindest zum Teil halbdurchlässigen Spiegeln und Linsen in zwei Strahlengänge aufgespalten wird. Der Nachweis der anteiligen gestreuten Strahlung geschieht mittels zwei Photomultiplyern. Dabei bilden die Beleuchtungseinrichtung, die Messanordnung und die Detektoranordnung eine baulich kompakte Einheit, die sowohl opto-mechanische als auch elektronische Bestandteile aufweist.

Die US 5,815,265 offenbart zur Vermeidung von Teilchen-Nachweisfehlern in Randbereichen eines Messvolumens das Vorsehen speziell ausgeformter Blenden im Beleuchtungs- und Streulicht-Strahlengang. Auch der Gegenstand dieser Druckschrift weist neben opto-mechanischen Elementen elektronische Bestandteile auf, insbesondere eine Lichtquelle und einen Lichtdetektor, die auf nicht näher aufgeführte Weise baulich mit der Messanordnung verbunden sind.

Die US 4,281,924 zeigt einen Hohlspiegel, von dem auf ihn im Wesentlichen parallel eintreffendes Licht auf einen Punkt fokussiert wird, in dessen Nähe der zu untersuchende Teilchenstrom vorbeiströmt.

Bei sämtlichen bekannten Verfahren und Vorrichtungen ist als nachteilig anzusehen, dass aufgrund der baulichen Nähe, insbesondere der Zusammenfassung von Messstellen und elektronischen Bestandteilen eine Verwendung in explosionsgefährdeter Umgebung nahezu ausgeschlossen ist, zumindest ohne zusätzliche kostenintensive Maßnahmen. Auch ein Messeinsatz an schwer zugänglichen Orten, beispielsweise bei einer Vermessung von Abgasen auf hohen Kaminen oder dergleichen, ist aufgrund der bekannten kompakten Bauformen nicht möglich, wenn die zum Teil empfindlichen und teuren elektronischen Bestandteile nicht schädigenden Witterungseinflüssen ausgesetzt werden und im Übrigen leicht zugänglich sein sollen. Bei bekannten Systemen, in denen eine einzelne Lichtquelle zur Beleuchtung mehrerer Messvolumina verwendet wird, ist aufgrund von Intensitätsverlusten an zur Strahlteilung eingesetzten optischen Bauelementen ein Beleuchten unterschiedlicher Messvolumina mit identischer Intensität in der Regel nicht gewährleistbar, was sich im Zuge der Auswertung der Messergebnisse negativ auswirken kann.

Verschiedene Partikelzähler haben auch bei gleicher Baureihe den Nachteil unterschiedlicher Gerätekenngrößen. Bei Filterprüfung mit einem Partikelzähler ist ein Messstellenumschalter nötig, der vor dem Partikelzähler eingesetzt wird. Zusätzlich sind noch lange Probenahmeschläuche von der Probenahmestelle bis zum Messstellenumschalter notwendig. Ein wesentlicher Nachteil besteht in den Partikelverlusten in den Schläuchen.

Bei unregelmäßig geformten Partikeln wie z.B. bei Quarzstaub oder bei Salzaerosolen wird das Streulicht durch einen höheren Reflexionsanteil höher. Es wird also ein zu großer Durchmesser gemessen. Schließlich ist das Gewicht des bekannter Sensoren erheblich.

Der Erfindung liegt daher die Aufgabe zugrunde, ein Verfahren und eine Vorrichtung anzugeben, mit denen eine intensive Beleuchtung mit hohem Wirkungsgrad erfolgt und insbesondere eine identische Bestrahlung einer Mehrzahl von Messvolumina und damit eine optimale Vergleichbarkeit der entsprechenden Messergebnisse erzielbar ist.

Erfindungsgemäß wird die genannte Aufgabe mit einem Verfahren bzw. eine Vorrichtung der eingangs genannten Art gelöst, welche die kennzeichnenden Merkmale des Anspruchs 1 bzw. 12 aufweist.

Bevorzugte Ausgestaltungen der Vorrichtung sehen vor, dass die Strahlungsquelle als Weißlichtquelle, beispielsweise als Xenon-Hochdrucklampe und dass ein Hohlspiegel derart ausgebildet und/oder die Strahlungsquelle derart innerhalb des Hohlspiegels angeordnet ist, dass parallel zu einer Brennebene des Hohlspiegels eine ringförmige Fläche existiert, die von einem homogenen Strahlungsfluss durchsetzt ist, wobei insbesondere ein oder mehrere Lichtwellenleiter mit ihren Aufnahmeoptiken zum Einkoppeln einer Strahlung im Bereich der ringförmigen Fläche, insbesondere geneigt zur Symmetrieachse des Hohlspiegels angeordnet ist bzw. sind.

Nach einer äußerst bevorzugten Ausgestaltung der Erfindung vorgesehen, dass eine Mehrzahl unterschiedlicher Fluidvolumina mittels einer Bestrahlungseinrichtung bestrahlt werden, durch die eine begrenzte, außerhalb der Bestrahlungeinrichtung befindliche Fläche mit einer Strahlung durchstrahlt wird, die in der gesamten Fläche eine im wesentlichen homogene Intensität aufweist. Hierzu sieht die Erfindung insbesondere vor, dass mehrere Lichtstrahlen aus einer einen Hohlspiegel aufweisenden Beleuchtungseinrichtung mit zur Symmetrieachse des Hohlspiegels geneigten Aufnahmeoptiken zur Weiterleitung ausgekoppelt werden.

Die erwähnte begrenzte Fläche homogener Strahlungsintensität ist erfindungsgemäß dadurch gebildet, dass ein Hohlspiegel derart ausgebildet und/oder die Strahlungsquelle derart innerhalb des Hohlspiegels angeordnet ist, dass parallel zu einer Brennebene des Hohlspiegels eine ringförmige Fläche existiert, die von einem homogenen Strahlungsfluß durchsetzt ist. Erfindungsgemäß ist darüber hinaus vorgesehen, dass ein oder mehrere Lichtwellenleiter mit ihren Aufnahmeoptiken zum Einkoppeln einer Strahlung im Bereich der ringförmigen Fläche, insbesondere geneigt zur Symmetrieachse des Hohlspiegels angeordnet ist bzw. sind. Auf diese Weise ist gewährleistet, dass bei mehreren Wellenleitern in jeden Lichtwellenleiter eine im wesentlichen gleiche Strahlungsintensität einkoppelbar ist.

Vorteile dieser Technik sind, dass die Gerätekenngrößen, wie das Auflösungsvermögen, die Klassifiziergenauigkeit und der Zählwirkungsgrad beider (oder mehr) Sensoreinheiten praktisch identisch sind. Diese Gerätekenngrößen sind abhängig von den opto-elektronischen Bauelementen sowohl sendeseitig, als auch empfangsseitig.

Um präzise Messungen an in Fluiden eingebetteten Teilchenströmen insbesondere auch in explosionsgefährdeter und/oder schädigender Umgebung sowie an schwer zugänglichen Orten, beispielsweise auf hohen Kaminen oder dergleichen zu ermöglichen, ist weiterhin vorgesehen, dass die Messung baulich getrennt von mindestens einer Bestrahlungseinrichtung und mindestens einer Empfängereinrichtung in mindestens einer Sensoranordnung erfolgt, die von einem die zu vermessenden Partikel enthaltenen Fluidstrom durchströmt wird, dass in der mindestens einen Sensoranordnung eine Signalbildung eines in der Empfängereinrichtung zu empfangenden Signals unter Verwendung ausschließlich opto-mechanischer Elemente erfolgt und dass Signale zwischen der mindestens einen Sensoranordnung und der mindestens einen Bestrahlungseinrichtung bzw. der mindestens einen Empfängereinrichtung mittels optischer Signalüberträger übertragen werden bzw. dass die mindestens eine Sensoranordnung baulich von der Bestrahlungseinrichtung und von der Empfängereinrichtung getrennt ist, dass die mindestens eine Sensoranordnung ausschließlich aus opto-mechanischen Elementen aufgebaut ist und dass zu einer Signalübertragung zwischen der mindestens einen Sensoranordnung und der mindestens einen Bestrahlungseinrichtung bzw. der mindestens eine Empfängereinrichtung optische Signalüberträger vorgesehen sind.

Aufgrund der baulichen Trennung von optischen und mechanischen Elementen einerseits sowie elektronischen Bestandteilen andererseits ist der Einsatz des erfindungsgemäßen Verfahrens bzw. der erfindungsgemäßen Vorrichtung auch in explosionsgefährdeter oder schädigender Umgebung und insbesondere auch an schwer zugänglichen Orten möglich, da nur die ausschließlich opto-mechanische Elemente aufweisende Sensoranordnung am Meßort installiert werden muß. Alle zum Einsatz kommenden Bestandteile, die elektronische Bauelemente beinhalten und deshalb bezüglich eines Einsatzes in explosionsgefährdeten Bereichen strengen Sicherheitsauflagen unterliegen und darüber hinaus gegenüber äußeren Einflüssen wie Temperatur und Feuchtigkeit anfällig sind, können an einer geeigneten Stelle abseits vom eigentlichen Messort untergebracht werden. Dadurch wird eine erweiterte Verwendbarkeit des erfindungsgemäßen Verfahrens und der erfindungsgemäßen Vorrichtung gegenüber dem Stand der Technik erreicht. Insbesondere ist es möglich, ausgehend von einer einzigen zentralen Beleuchtungseinrichtung und einer ebensolchen Detektoreinrichtung ein Netz von Meßstellen zu betreiben, die an verschiedenen kritischen Punkten eines Teilchen- bzw. Fluidstroms, beispielsweise vor und hinter einer Filteranlage für Abgasströme, angeordnet sein können.

In einer bevorzugten Ausgestaltung ist hierzu vorgesehen, dass Signale zwischen Sensoreinrichtung und Bestrahlungs- bzw. Empfängereinrichtung mittels Lichtwellenleitern übertragen werden. Auf diese Weise läßt sich eine effiziente und kostengünstige Signalübertragung erreichen, die auch in baulich nur schwer zugänglichen Bereichen erfolgen kann. Zur Ermöglichung genauer Messungen sieht die Erfindung vor, dass die mindestens eine Sensoranordnung mindestens eine erste Abbildungsoptik und mindestens eine erste Blende zum Bestrahlen mindestens eines Fluidvolumens aufweist, deren Blendenöffnung einen zum Inneren der Blendenöffnung konvex ausgebildeten Rand aufweist, wobei der Rand insbesondere T- oder H-förmig ausgebildet ist.

Nach einer weiteren bevorzugten Ausgestaltung der Erfindung ist darüber hinaus vorgesehen, dass die mindestens eine Sensoranordnung mindestens eine zweite Abbildungsoptik und mindestens eine zweite zum Betrachten eines Teils des bestrahlten Fluidvolumens angeordnete Blende aufweist, die nach einer äußerst bevorzugten Ausgestaltung ebenfalls eine Blendenöffnung mit konvexen Rändern besitzt. Auf diese Weise ist es bei gleichzeitiger Verwendung einer geeigneten Auswertelektronik möglich, eine Korrektur der erhaltenden Meßergebnisse dahingehend vorzunehmen, dass der fehlerbehaftete Einfluß von Teilchen in Randbereichen eines Meßvolumens abgeschwächt wird.

Das Betrachten eines bestrahlten Fluidvolumens erfolgt vorzugsweise unter einem endlichen Winkel gegenüber einer Bestrahlungsrichtung, wobei nach einer weiteren bevorzugten Ausgestaltung der Erfindung ein Betrachtungswinkel von etwa 90° bezüglich der Bestrahlungsrichtung gewählt ist. Insbesondere bei Partikeln im Mikrometerbereich kann auch ein Betrachtungswinkel von 180° angezeigt sein, da derartige Partikel Licht bevorzugt in Vorwärtsrichtung streuen.

Um die Signale einer Mehrzahl von Sensoranordnungen quasisimultan verarbeiten und auswerten zu können, sieht die Erfindung in einer bevorzugten Ausgestaltung vor, dass die mindestens eine Empfängereinrichtung in einem Zeit-Multiplex betrieben wird. Vorzugsweise ist zu diesem Zweck vor einer Signaleinstrahlöffnung der Empfängereinrichtung eine Strahlunterbrechungseinrichtung angeordnet. Diese ist nach einer weiteren Ausgestaltung der Erfindung als um eine Achse senkrecht zu ihrer Oberfläche rotierbare Kreisscheibe mit einer von einem Kreismittelpunkt beabstandeten Öffnung ausgebildet. Auf diese Weise läßt sich erreichen, dass zu einem bestimmten Zeitpunkt jeweils nur das von einer bestimmten Sensoranordnung stammende Signal in die Empfängereinrichtung gelangt.

Die Erfindung sieht weiterhin vor, dass eine Mehrzahl von Lichtwellenleitern derart auf einer der Empfängereinrichtung abgewandten Seite der Strahlunterbrechungseinrichtung angeordnet ist, dass bei Drehung der Strahlunterbrechungseinheit pro Zeiteinheit nur eine Strahlung eines einzigen Lichtwellenleiters in die Empfängereinrichtung einstrahlbar ist.

Um auch die Messung der Gesamtpartikelgröße und -konzentration von in ein Fluid eingebetteten Gemischen von Feststoffteilchen und Flüssigkeitströpfchen zu ermöglichen, sieht eine weitere Ausgestaltung der Erfindung vor, dass ein Fluidstrom nacheinander durch mindestens zwei Sensoranordnungen geführt ist, zwischen denen jeweils eine Heizeinrichtung zum Erhitzen des Fluidstroms vorgesehen ist. Vorzugsweise lassen sich durch die Heizeinrichtungen Fluidtemperaturen bis etwa 400°C erreichen, so dass beispielsweise in einem Abgas enthaltene Öltröpfchen verdampft werden, um die Messung auf Feststoffteilchen zu beschränken. Weiterhin ist erfindungsgemäß vorgesehen, dass auch eine oder mehrere der mindestens zwei Sensoranordnungen beheizbar sind. Vorzugsweise lassen sich im Zuge einer solchen Ausgestaltung in den Sensoreinrichtungen Temperaturen bis zu 250°C erreichen, so dass leicht flüchtige Substanzen, die ggf. auch den Oberflächen von Feststoffteilchen adsorbiert sind, eliminiert werden.

Insgesamt ergeben sich durch die Erfindung die folgenden Vorteile:

Die Einsetzung kleiner austauschbarer Sensoren ohne Elektronik mit unterschiedlich großen Messvolumen zur Messung von unterschiedlichen maximal Konzentrationen ist in explosionsgefährdeten Umgebungen möglich. Zwei oder mehrere Sensoren haben die gleiche Lichtquelle und den gleichen Detektor. Die Gerätekenngrößen dieses Messsystems sind somit waagerecht. Die gleichzeitige Streulichtmessung von mindestens 2 x 90° oder mehr auf einen Detektor erlaubt die genauere Durchmesserbestimmung von unregelmäßig geformten Partikeln über eine optische Mittelwertbildung. Durch die Hintereinanderschaltung zweier Sensoren mit unterschiedlichen Messvolumengrößen und alternierender Streulichtdetektion kann in einem größeren Konzentrationsbereich und/oder Partikelgrößenmessbereich auf einmal gemessen werden. Mindestens zwei Größenbereiche, wie 0,3µm - 17 µm, 0,7µ - 40 µm können somit auf einmal gemessen werden.

Weitere Vorteile und Merkmale der Erfindung ergeben sich aus den Ansprüchen und aus der nachfolgenden Beschreibung, in der Ausführungsbeispiele unter Bezugnahme auf die Figuren im einzelnen erläutert sind. Dabei zeigt:
- Fig. 1: eine schematische Darstellung einer erfindungsgemäßen Vorrichtung mit einer Beleuchtungseinrichtung, einer Empfängereinrichtung sowie zwei Sensoranordnungen;
- Fig. 2: eine Schnittansicht längs der Linie I-I der Fig. 1;
- Fig. 3: eine Ausgestaltung einer erfindungsgemäßen Strahlunterbrechungseinrichtung;
- Fig. 4: eine schematische Darstellung einer erfindungsgemäßen Vorrichtung mit nur einer Sensoranordnung;
- Fig. 5: eine schematische Darstellung einer weiteren erfindungsgemäßen Vorrichtung;
- Fig. 6: eine erfindungsgemäße Anordnung von zwei Sensoranordnungen und einem Heizelement; und
- Fig. 7a,b: Ausgestaltungen erfindungsgemäßer Blendenöffnungen.

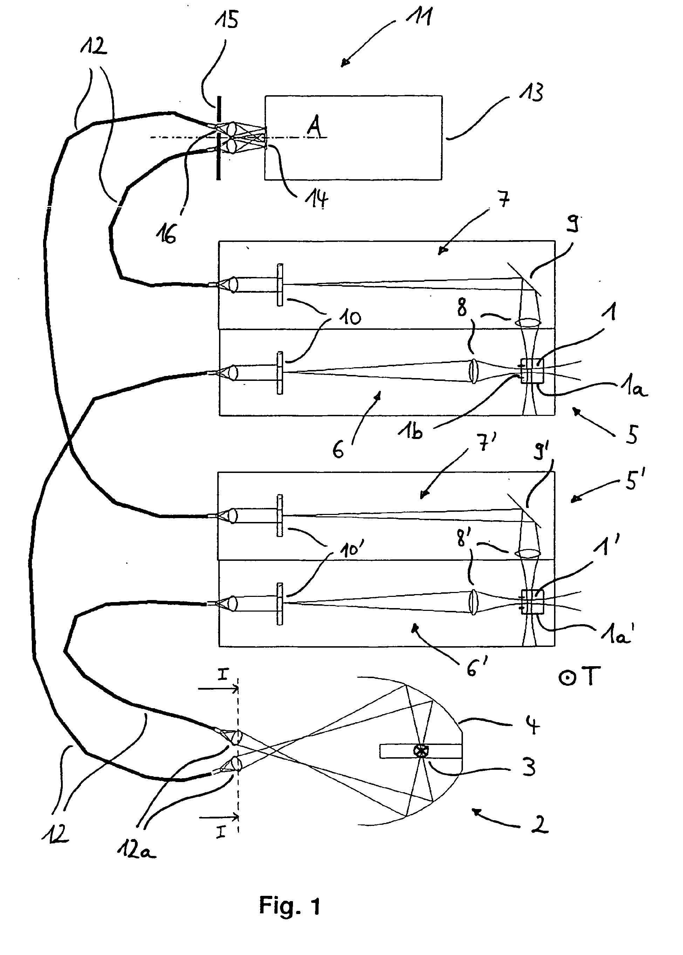

Im in Fig. 1 dargestellten Ausführungsbeispiel weist die erfindungsgemäße Vorrichtung zum Messen von Partikeleigenschaften zwei Sensoranordnungen 5, 5' auf. Jede Sensorandordnung 5, 5' weist eine einen Teilchenstrom 1, 1' führende Leitung 1a, 1a' auf, deren Wandung transparent ausgebildet ist oder transparente Fenster 1b hat (lediglich das Fenster 1b in der Leitung 1a ist beispielhaft dargestellt; überall dort, wo Lichtstrahlen die Wandung der Leitung 1a, 1a' kreuzend dargestellt sind, ist ein solches Fenster 1b vorhanden). Es ist weiter eine Beleuchtungseinrichtung 2 mit einer Lichtquelle 3, vorzugsweise einer Quelle weißen Lichtes, vor einem Hohlspiegel 4 oder innerhalb seiner Kontur vorhanden, von welcher eine Beleuchtung des Teilchenstroms 1 mit Strömungsrichtung T senkrecht zur Blattebene zur Messung eines Teilchenstroms in einem Fluid, beispielsweise einem Aerosol, erfolgt.

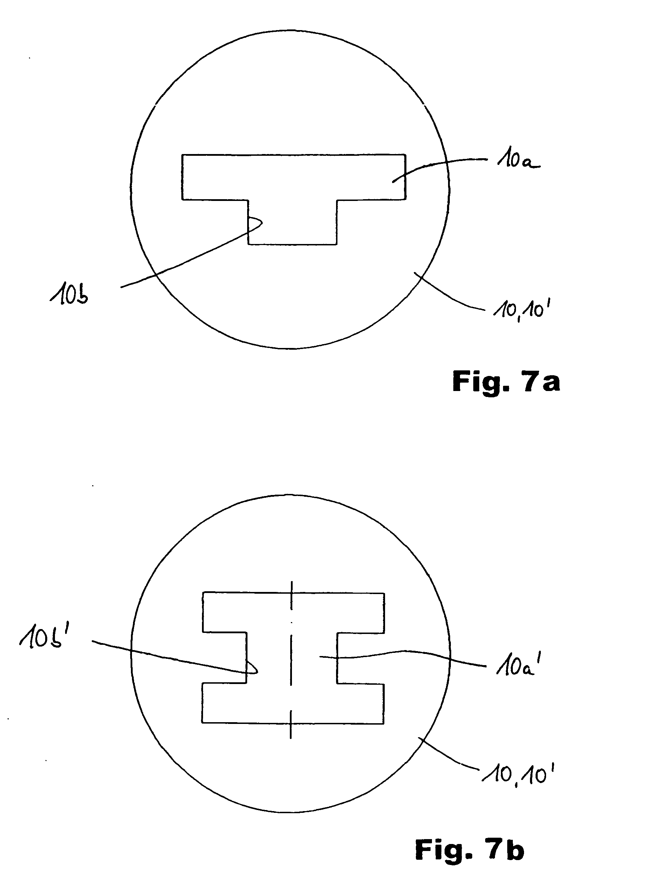

Die Sensoranordnung 5, 5' haben jeweils eine Bestrahlungsoptik 6, 6' und eine Abbildungsoptik 7, 7', die ausschließlich opto-mechanische Bestandteile wie Linsen 8, 8', Spiegel 9, 9' und Blenden 10, 10' (vgl. Fig. 7a,b) aber keinerlei elektrische oder elektronische Elemente aufweisen. Eine Empfängereinrichtung 11 weist einen Photodetektor 13, beispielsweise einen Photomultiplyer, mit einer Signaleinstrahlöffnung 14 und einer vor dieser angeordneten Strahlunterbrechungseinrichtung 15 auf, die beim gezeigten Ausführungsbeispiel als rotierbare Kreisscheibe mit einer exzentrisch angeordneten Öffnung 16 ausgebildet ist.

Die Übertragung von Lichtsignalen zwischen der Bestrahlungseinrichtung 2, den Sensoreinrichtungen 5, 5' und der Empfängereinrichtung 11 erfolgt über Lichtwellenleiter 12, beispielsweise in Form von Glasfaserkabeln. Das vom Photodetektor 13 gelieferte Signal wird in einer anschließenden Elektronik (nicht gezeigt) verarbeitet, die baulich mit dem Photodetektor verbunden sein kann.

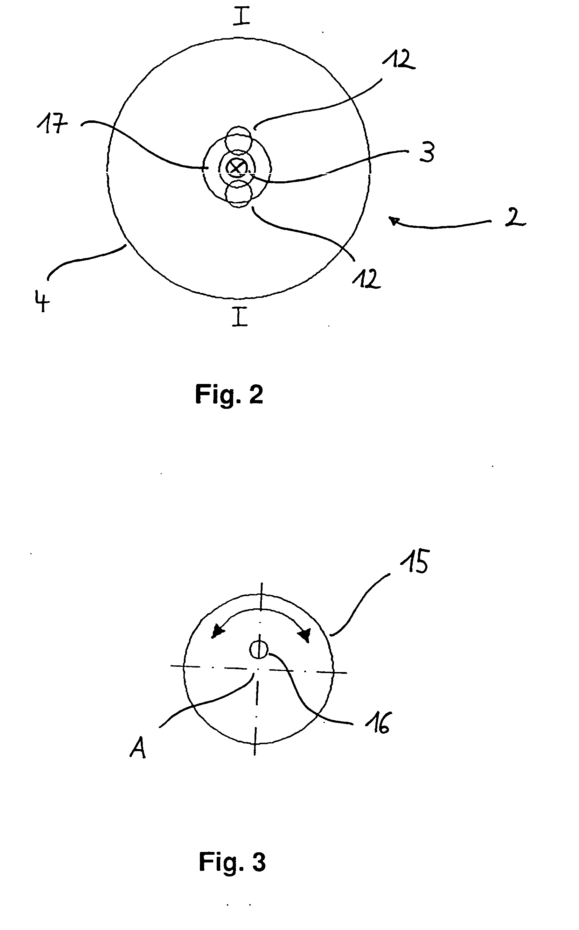

Beim hier gezeigten Ausführungsbeispiel ist die Lichtquelle 3 geringfügig außerhalb eines Brennpunktes des Hohlspiegels 4 angeordnet, so dass die Lichtstrahlen den Hohlspiegel nicht als paralleles Lichtbündel verlassen, sondern einen in Fig. 2 gezeigten Lichtkreis 17 bilden.

Fig. 2 zeigt die Anordnung der Lichtquelle 3 innerhalb des Hohlspiegels 4 der Beleuchtungseinrichtung 2, wie sie bei den Ausführungsbeispielen der Figuren 1 bis 3 zum Einsatz kommt. Durch die Anordnung der Lichtquelle 3 außerhalb des Brennpunktes des Hohlspiegels 4 entsteht vor dem Hohlspiegel 4 ein ringförmiger Lichtkreis 17, d.h. eine ringförmige Fläche, die von einem flächenmäßig im wesentlichen homogenen Lichtstrom durchsetzt ist. Im Bereich des Lichtkreises 17 sind beim gezeigten Ausführungsbeispiel zwei Lichtwellenleiter 12 mit an ihren Enden vorhandenen Aufnahmeoptiken 12a zum Einkoppeln des Lichts in die Lichtwellenleiter 12 derart außerhalb der Symmetrieachse des Hohlspiegels angeordnet und unter unterschiedlichen Winkeln zu diesem ausgerichtet, dass jeweils die gleiche Lichtmenge in die Lichtwellenleiter 12 eingekoppelt wird.

Auf die dargestellte Weise läßt sich jeweils die gleiche Lichtmenge in eine Mehrzahl von Lichtwellenleitern 12 (Fig. 1) einkoppeln. Mittels der Lichtwellenleiter 12 wird die eingekoppelte Lichtmenge beim gezeigten Ausführungsbeispiel zu den zwei Sensoranordnungen 5, 5' geleitet, in der mit Hilfe der Bestrahlungsoptik 6, 6' ein gewisses Teilvolumen des Partikelstroms 1, 1' beleuchtet wird. Wenn - wie dies erfindungsgemäß vorgesehen ist - T-Blenden oder H-Blenden 10, 10' verwendet werden, läßt sich aufgrund der besonderen Geometrie des optischen Meßvolumens bei entsprechender Signalauswerteung ein Randzonenfehler weitgehend vermeiden.

Die im Fluid 1, 1' enthaltenen Partikel streuen das eingestrahlte Licht. Beim gezeigten Ausführungsbeispiel erfolgt eine Streulichtdetektion unter einem Winkel von 90°, wobei das von den Partikeln unter diesem Winkel ausgesandte Streulicht mit Hilfe der Abbildungsoptik 7, 7' wiederum in Lichtwellenleiter 12 eingekoppelt wird, durch die eine Weiterleitung zur Empfängereinrichtung 11 gewährleistet ist.

Aufgrund der durch den Einsatz von Lichtwellenleitern 12 gegebenen flexiblen Positionierung der Sensoranordnungen 5, 5' ermöglicht die Erfindung eine simultane Messung von Partikelgrößen und Partikelkonzentrationen bei einer Mehrzahl von Teilchenströmen und/oder an verschiedenen Stellen innerhalb eines Teilchenstroms, beispielsweise zur Filterprüfung in einem Roh- und einem Reingas mit einem zwischen geordneten Filter. Beim gezeigten Ausführungsbeispiel wird der Photodetektor 13 deshalb im Zeit-Multiplex betrieben. Ein zeitlich getrenntes Einstrahlen der Sensorsignale in die Signaleinstrahlöffnung 14 des Photodetektors 13 wird mit Hilfe der chopperartigen rotierenden Strahlunterbrechungseinrichtung 15 erreicht, die beispielhaft in Fig. 3 genauer dargestellt ist.

Fig. 3 zeigt die erfindungsgemäße Strahlunterbrechungseinrichtung 15 in einer Ausführungsform als rotierbare Kreisscheibe, die eine exzentrisch angeordnete, ebenfalls kreisförmige Öffnung 16 aufweist. Die Kreisscheibe 15 ist um eine Rotationsachse A drehbar, so dass mittels der Öffnung 16 in einer der Rotationsgeschwindigkeit der Scheibe entsprechenden zeitlichen Abfolge nur die Strahlung jeweils einer von auf einem Kreis angeordneten Signalquellen die Strahlunterbrechungseinrichtung 15 passieren kann.

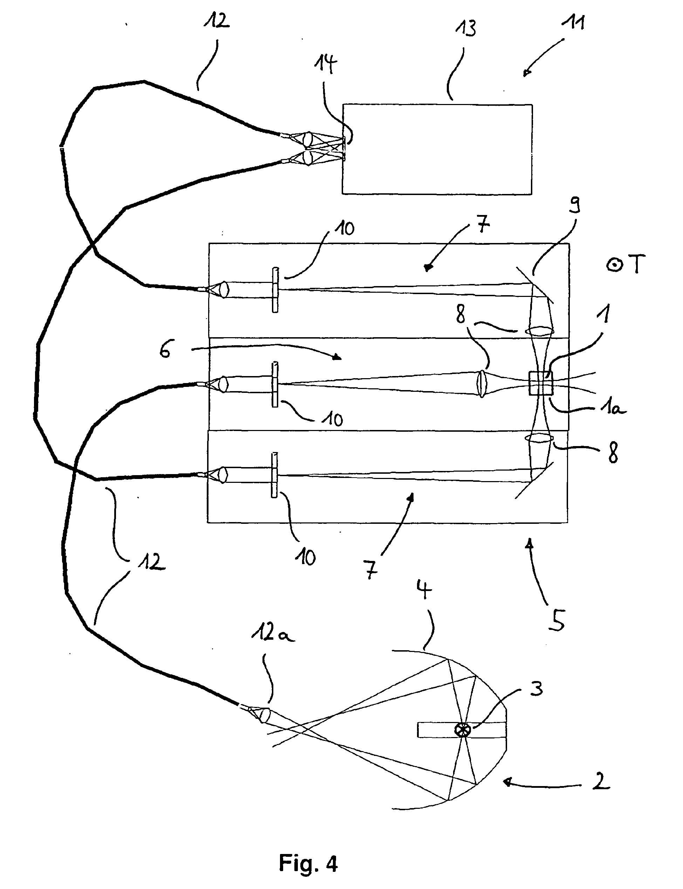

Fig. 4 zeigt in einem weiteren Ausführungsbeispiel eine im wesentlichen der in Fig. 1 gezeigten Vorrichtung entsprechende Ausgestaltung einer erfindungsgemäßen Vorrichtung. Im Unterschied zu Fig. 1 sind hier bei einem beleuchteten Meßvolumen des Teilchenstroms 1 neben der zu Beleuchtungszwecken dienenden Bestrahlungsoptik 6 zwei Abbildungsoptiken 7 vorgesehen, mit denen das an den Partikeln gestreute Licht unter zwei verschiedenen Winkeln, beispielsweise 90° und 270°, nachweisbar ist. Das Streulicht wird wiederum mit Lichtwellenleitern 12 zu einem Photodetektor 13 geleitet, wo es gemeinsam in die Signaleinstrahlöffnung 14 des Photodetektors 13 eingestrahlt wird. Auf diese Weise lassen sich auch unregelmäßig geformte Partikel; insbesondere mit glatten Flächen sicher detektieren, die ein hochgradig unregelmäßiges, richtungselektives Streuverhalten zeigen. Möglich ist auch eine getrennte Auswertung der verschiedenen Streuwinkeln zugeordneten Kanäle, um einen Vergleich eine Bewertung der Meßereignisse vornehmen zu können.

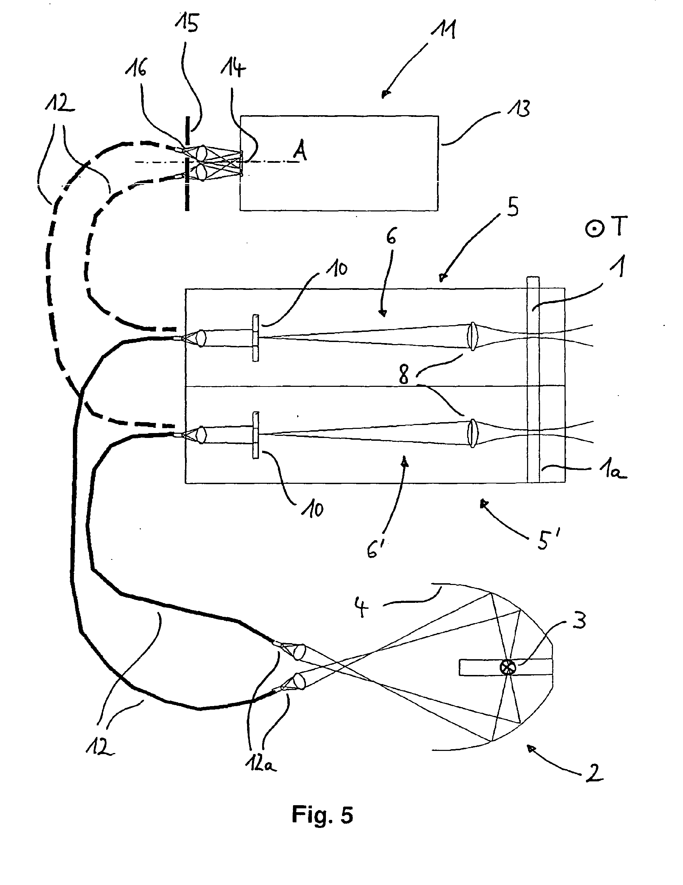

Fig. 5 zeigt ein weiteres Ausführungsbeispiel einer erfindungsgemäßen Vorrichtung, bei der eine Mehrzahl von Meßvolumina innerhalb eines Teilchenstroms 1 hintereinandergeschaltet sind. Wie bei den bereits beschriebenen Ausführungsbeispielen der Figuren 1 und 2 umfassen die Sensoranordnungen 5, 5' jeweils eine Bestrahlungsoptik 6, 6' sowie eine Abbildungsoptik, die aus Gründen der Übersichtlichkeit hier nicht explizit dargestellt ist.

Durch die Reihenschaltung mehrerer Meßvolumina läßt sich bei Verwendung entsprechender unterschiedlicher Bestrahlungs- 6, 6' und Abbildungsoptiken 7, 7' ein gemeinsammes Erfassen einer entsprechenden Mehrzahl von Partikelgrößen-Meßbereichen, beispielsweise 0,25 bis 17 µm und 0,6 bis 45 µm, erreichen. Der Betrieb der Empfängereinrichtung 11 erfolgt, wie hinsichtlich der Fig. 1 besprochen, im Zeit-Multiplex unter Einsatz einer Strahlunterbrechungseinrichtung 15.

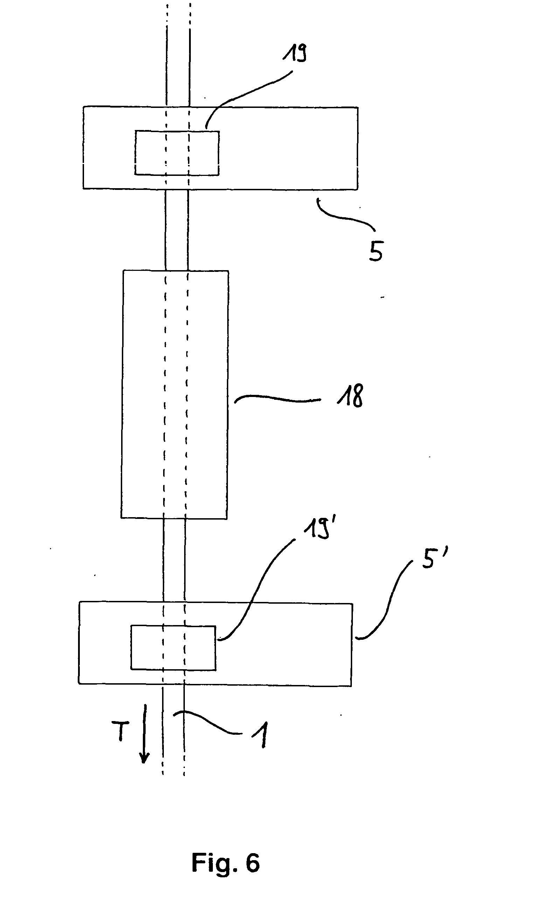

Fig. 6 zeigt ein konkretes Anwendungsbeispiel mit zwei räumlich voneinander getrennten Sensoranordnungen 5, 5' gemäß Fig. 1, die von ein und demselben Teilchenstrom 1 durchsetzt werden. Zwischen den Sensoranordnungen 5, 5' befindet sich eine Heizeinrichtung 18, die ebenfalls von dem Teilchenstrom 1 durchsetzt ist. Auch die Sensoranordnungen 5, 5' beinhalten Heizeinrichtungen 19, 19', die in den vom Teilchenstrom 1 durchsetzten Bereichen des Sensoranordnungen 5, 5' angeordnet sind.

Mit Hilfe der in den Sensoranordnungen 5, 5' enthaltenen Heizeinrichtungen 19, 19' sind Fluidtemperaturen bis 250°C erreichbar. Dagegen lassen sich mit der separaten Heizeinrichtung 18 Temperaturen bis 400°C erzielen, wodurch ggf. im Fluid enthaltene Flüssigkeitströpfchen, beispielsweise Öltröpfchen, verdampft werden. Zusätzlich zu einer Messung der Gesamtpartikelgröße und -konzentratione in der Sensoranordnung 5 liefert die Sensoranordnung 5' nur Informationen bezüglich des Staubanteils im Fluid. Bei geeigneter Signalauswertung ergeben sich auf diese Weise separate Informationen bezüglich des Festkörper- und Flüssigkeitsgehalts von Fluiden, insbesondere von Aerosolen.

Die Fig. 7a,b zeigen bevorzugte Ausgestaltungen von erfindungsgemäßen Blenden 10, 10' (Fig. 1,4,5). Die Fig. 7a zeigt eine Blende 10 mit T-förmiger Blendenöffnung 10a, deren Rand 10b nach innen konvex ausgebildet ist. In der Fig. 7b ist eine H-förmige Blendenöffnung 10a' dargestellt, deren Rand 10b' ebenfalls zum Inneren der Blendenöffnung konvex ausgebildet ist. Hierdurch kann randzonenfehlerfrei gemessen werden.

## Patentansprüche

1. Verfahren zum Messen von Eigenschaften von Partikeln in einem Fluid durch Detektion einer an einzelnen Partikeln in mindestens einem Messvolumen gestreuter elektromagnetischer Strahlung, mit Beleuchtung des Messvolumens mittels einer mindestens eine vor einem Hohlspiegel angeordnete Strahlungsquelle aufweisenden Beleuchtungseinrichtung, **dadurch gekennzeichnet, dass** aus der Beleuchtungseinrichtung mindestens zwei Lichtstrahlen mittels zur Symmetrieachse des Hohlspiegels geneigten Aufnahmeoptiken zur Weiterleitung ausgekoppelt werden.

2. Verfahren nach Anspruch 1, **dadurch gekennzeichnet, dass** die Messung baulich getrennt von mindestens einer Bestrahlungseinrichtung und mindestens einer Empfängereinrichtung in mindestens einer Sensoranordnung erfolgt, die von einem die zu vermessenden Partikel enthaltenen Fluidstrom durchströmt wird, dass in der mindestens einen Sensoranordnung eine Signalbildung eines in der Empfängereinrichtung zu empfangenden Signals unter Verwendung ausschließlich opto-elektrischer Elemente erfolgt und dass Signale zwischen der mindestens einen Sensoranordnung und der mindestens einen Bestrahlungseinrichtung bzw. der mindestens einen Empfängereinrichtung mittels optischer Signalüberträger übertragen werden.

3. Verfahren nach Anspruch 2, **dadurch gekennzeichnet, dass** Signale zwischen Sensoreinrichtung und Bestrahlungs- bzw. Empfängereinrichtung mittels Lichtwellenleitern übertragen werden.

4. Verfahren nach einem der vorangehenden Ansprüche, **dadurch gekennzeichnet, dass** in der mindestens einen Sensoranordnung ein fluiddurchströmtes Messvolumen unter Verwendung mindestens einer ersten Blende, deren Blendenöffnung einen zum Inneren der Blendenöffnung konvex ausgebildeten Rand aufweist, beleuchtet wird.

5. Verfahren nach einem der vorangehenden Ansprüche, **dadurch gekennzeichnet, dass** das Messvolumen unter Verwendung mindestens einer zweiten Blende, deren Blendenöffnung einen zum Inneren der Blendenöffnung konvex ausgebildeten Rand aufweist, betrachtet wird.

6. Verfahren nach einem der vorangehenden Ansprüche, **dadurch gekennzeichnet, dass** bei Verwendung einer Mehrzahl von unterschiedlich ausgestalteten Sensoranordnungen Größen und/oder Konzentrationen der Teilchen mit unterschiedlichen Messvolumina in einem Fluidstrom und/oder in einer Mehrzahl von Fluidströmen gemessen werden.

7. Verfahren nach einem der vorangehenden Ansprüche, **dadurch gekennzeichnet, dass** eine Mehrzahl unterschiedlicher Fluidvolumina mit im Wesentlichen gleicher Intensität bestrahlt werden, insbesondere mittels einer Bestrahlungseinrichtung, durch die eine endliche, außerhalb der Bestrahlungeinrichtung befindliche Fläche mit einer Strahlung durchstrahlt wird, die in der gesamten Fläche im Wesentlichen homogene Intensität aufweist.

8. Verfahren nach einem der vorangehenden Ansprüche, **dadurch gekennzeichnet, dass** das mindestens eine Messvolumen aus mehreren Raumrichtungen zugleich beobachtet wird.

9. Verfahren nach einem der vorangehenden Ansprüche, **dadurch gekennzeichnet, dass** ein Fluidstrom nach einem Durchströmen einer ersten Sensoranordnung und vor einem Durchströmen einer zweiten Sensoranordnung zum Verdampfen mindestens einer im Fluidstrom enthaltenen Stoffkomponente aufgeheizt wird.

10. Verfahren nach einem der vorangehenden Ansprüche, **dadurch gekennzeichnet, dass** bei Verwendung einer gegenüber einer Anzahl von Empfängereinrichtungen vergrößerten Anzahl von Sensoranordnungen die Empfängereintrichtungen in einem Zeit-Multiplex betrieben werden.

11. Verfahren nach Anspruch 10, **dadurch gekennzeichnet, dass** die bei einer Empfängereinrichtung eintreffenden Sensorsignale durch eine Strahlunterbrechungseinrichtung zeitlich getrennt in die Empfängereinrichtung eingespeist werden.

12. Vorrichtung zum Messen von Eigenschaften von Partikeln in einem Fluid durch Detektion einer an einzelnen Partikeln in mindestens einem Messvolumen gestreuter elektromagnetischer Strahlung mit mindestens einer eine Strahlungsquelle (3) und einen Hohlspiegel (4) aufweisenden Bestrahlungseinrichtung und mindestens einer Empfängereinrichtung sowie mindestens einer von einem die zu vermessenden Partikel enthaltenen Fluidstrom durchströmten Sensoranordnung, insbesondere nach dem Verfahren gemäß einem der Ansprüche 1 bis 11, **dadurch gekennzeichnet, dass** mindestens zwei Lichtwellenleiter (12) mit ihren Aufnahmeoptiken (12a) zum Einkoppeln einer Strahlung im Bereich der ringförmigen Fläche (17), insbesondere geneigt zur Symmetrieachse des Hohlspiegels (4) angeordnet sind.

13. Vorrichtung nach Anspruch 12, **dadurch gekennzeichnet, dass** die Strahlungsquelle (3) als Weißlichtquelle ausgebildet ist.

14. Vorrichtung nach einem der Ansprüche 12 oder 13, **dadurch gekennzeichnet, dass** ein Hohlspiegel (4) derart ausgebildet und/oder die Strahlungsquelle (3) derart innerhalb des Hohlspiegels (4) angeordnet ist, dass parallel zu einer Brennebene des Hohlspiegels (4) eine ringförmige Fläche (17) existiert, die von einem homogenen Strahlungsfluss durchsetzt ist.

15. Vorrichtung nach einem der Ansprüche 13 bis 14, **dadurch gekennzeichnet, dass** die mindestens eine Sensoranordnung (5,5') baulich von der Bestrahlungseinrichtung (2) und von der Empfängereinrichtung (11) getrennt ist, dass die mindestens eine Sensoranordnung (5, 5') ausschließlich aus opto-mechanischen Elementen (8,8',9,9',10,10') aufgebaut ist und dass zu einer Signalübertragung zwischen der mindestens einen Sensoranordnung (5,5') und der mindestens einen Bestrahlungseinrichtung (2) bzw. der mindestens einen Empfängereinrichtung (11) optische Signalüberträger (12) vorgesehen sind.

16. Vorrichtung nach Anspruch 15, **dadurch gekennzeichnet, dass** die Signalüberträger (12) als Lichtwellenleiter ausgebildet sind.

17. Vorrichtung nach einem der Ansprüche 12 bis 16, **dadurch gekennzeichnet, dass** die mindestens eine Sensoranordnung (5,5') mindestens eine erste Abbildungsoptik mit mindestens einer ersten zum Bestrahlen mindestens eines Fluidvolumens (1,1') angeordneten Blende (10,10') aufweist, deren Blendenöffnung (10a, 10a') mit konvexen Rändern (10b, 10b'), insbesondere T- oder H-förmig ausgebildet ist.

18. Vorrichtung nach Anspruch 17, **dadurch gekennzeichnet, dass** die mindestens eine Sensoranordnung (5,5') mindestens eine zweite Abbildungsoptik (7,7') mit mindestens einer zweiten zum Betrachten wenigstens eines Teils des bestrahlten Fluidvolumens (1,1') angeordneten Blende (10,10') aufweist.

19. Vorrichtung nach Anspruch 18, **dadurch gekennzeichnet, dass** die Blendenöffnung (10a, 10a') der zweiten Blende (10,10') mit konvexen Rändern (10b, 10b'), insbesondere T- oder H-förmig ausgebildet ist.

20. Vorrichtung nach Anspruch 19, **dadurch gekennzeichnet, dass** mindestens eine zweite Blende (10,10') und die mindestens eine zweite Abbildungsoptik (7,7') zum Betrachten des bestrahlten Fluidvolumens (1,1') unter einem endlichen Winkel gegenüber einer Bestrahlungsrichtung angeordnet sind.

21. Vorrichtung nach Anspruch 20, **dadurch gekennzeichnet, dass** der Winkel etwa 90° beträgt.

22. Vorrichtung nach einem der Ansprüche 12 bis 21, **dadurch gekennzeichnet, dass** bei mehreren Wellenleitern (12) im Wesentlichen eine gleiche Strahlungsintensität einkoppelbar ist.

23. Vorrichtung nach einem der Ansprüche 12 bis 22, **dadurch gekennzeichnet, dass** dem mindestens einen Messvolumen (1, 1') mindestens zwei Empfangsabbildungsoptiken (7, 8) in verschiedenen Raumrichtungen zugeordnet sind.

24. Vorrichtung nach einem der Ansprüche 12 bis 22, **dadurch gekennzeichnet, dass** die mindestens eine Empfängereinrichtung (11) in einem Zeit-Multiplex betreibbar ist.

25. Vorrichtung nach Anspruch 24, **dadurch gekennzeichnet, dass** vor einer Signaleinstrahlöffnung (14) der Empfängereinrichtung (11) eine Strahlunterbrechungseinrichtung (15) angeordnet ist.

26. Vorrichtung nach Anspruch 25, **dadurch gekennzeichnet, dass** die Strahlunterbrechungseinrichtung (15) als um eine Achse (A) senkrecht zu ihrer Oberfläche rotierbare Kreisscheibe mit einer von einem Kreismittelpunkt beabstandeten Öffnung (16) ausgebildet ist.

27. Vorrichtung nach Anspruch 26, **dadurch gekennzeichnet, dass** eine Mehrzahl von Lichtwellenleitern (12) derart auf einer der Empfängereinrichtung (11) abgewandten Seite der Strahlunterbrechungseinrichtung (15) angeordnet ist, dass bei Drehung der Strahlunterbrechungseinrichtung (15) pro Zeiteinheit nur eine Strahlung eines einzigen Lichtwellenleiters (12) in die Empfängereinrichtung (11) einstrahlbar ist.

28. Vorrichtung nach einem der Ansprüche 12 bis 27, **dadurch gekennzeichnet, dass** ein Fluidstrom (1) nacheinander durch mindestens zwei Sensoranordnungen (5,5') geführt ist, zwischen denen jeweils eine Heizeinrichtung (18) zum Erhitzen des Fluidstroms (1) vorgesehen ist.

29. Vorrichtung nach Anspruch 28, **dadurch gekennzeichnet, dass** durch die Heizeinrichtung (18) Fluid-Temperaturen bis etwa 400°C erreichbar sind.

30. Vorrichtung nach Anspruch 28 oder 29, **dadurch gekennzeichnet, dass** eine oder mehrere der mindestens zwei Sensoranordnungen (5,5') beheizbar sind.

31. Vorrichtung nach Anspruch 30, **dadurch gekennzeichnet, dass** in den Sensoranordnungen (5,5') Temperaturen bis etwa 250°C erreichbar sind.

## Claims

1. Method for measuring the characteristics of particles in a fluid by detecting electromagnetic radiation scattered on individual particles in at least one measuring volume, with illumination of the measuring volume by means of an illuminating device having at least one radiation source positioned upstream of a concave mirror, **characterized in that** from the illuminating device are coupled for redirection purposes at least two light beams by means of recording optics inclined to the axis of symmetry of the concave mirror.

2. Method according to claim 1, **characterized in that** the measurement takes place in structurally separated manner from at least one radiating device and at least one receiver means in at least one sensor arrangement, through which flows a fluid flow containing the particles to be measured, that in the at least one sensor arrangement a signal formation takes place of a signal to be received in the receiver means using exclusively opto-electrical elements and that the signals are transmitted between the at least one sensor arrangement and the at least one radiating device or the at least one receiver means by using optical signal transmitters.

3. Method according to claim 2, **characterized in that** signals are transmitted between the sensor arrangement and irradiating or receiver means using optical waveguides.

4. Method according to one of the preceding claims, **characterized in that** illumination takes place in the at least one sensor arrangement of a measuring volume through which a fluid flows using at least one first diaphragm, whose diaphragm aperture has an edge convexly formed towards the inside of the diaphragm aperture.

5. Method according to one of the preceding claims, **characterized in that** the measuring volume is observed using at least one second diaphragm, whose diaphragm aperture has an edge convexly formed towards the inside of the diaphragm aperture.

6. Method according to one of the preceding claims, **characterized in that** when using a plurality of differently designed sensor arrangements the sizes and/or concentrations of the particles with different measuring volumes are measured in a fluid flow and/or in a plurality of fluid flows.

7. Method according to one of the preceding claims, **characterized in that** a plurality of different fluid volumes are irradiated with substantially the same intensity, particularly by means of a radiating device through which a finite surface located outside the radiating device is irradiated with radiation having a substantially homogeneous intensity throughout the entire surface.

8. Method according to one of the preceding claims, **characterized in that** the at least one measuring volume is simultaneously observed from several spatial directions.

9. Method according to one of the preceding claims, **characterized in that** after flowing through a first sensor arrangement and prior to flowing through a second sensor arrangement a fluid flow is heated in order to evaporate at least one material component contained in the fluid flow.

10. Method according to one of the preceding claims, **characterized in that** when using a larger number of sensor arrangements than there are receiver means, the receiver means are operated in time multiplex.

11. Method according to claim 10, **characterized in that** the sensor signals entering a receiver means are fed in time-separated manner into said receiver means by a beam interruption device.

12. Device for measuring the characteristic of particles in a fluid by detecting electromagnetic radiation scattered on individual particles in at least one measuring volume and having at least one radiating device having a radiation source (3) and a concave mirror (4) and at least one receiver means, together with at least one sensor arrangement through which flows a fluid flow containing the particles to be measured, particularly according to the method of one of the claims 1 to 11, **characterized in that** at least two optical waveguides (12) with their recording optics (12a) for coupling in radiation are located in the vicinity of the annular surface (17) and in particular inclined to the axis of symmetry of concave mirror (4).

13. Device according to claim 12, **characterized in that** the radiation source (3) is constructed as a white light source.

14. Device according to one of the claims 12 or 13, **characterized in that** a concave mirror (4) is constructed in such a way and/or the radiation source (3) is so positioned within the concave mirror (4) that parallel to a focal plane of the concave mirror (4) there is an annular surface (17) traversed by a homogeneous radiation flux.

15. Device according to one of the claims 13 or 14, **characterized in that** the at least one sensor arrangement (5, 5') is structurally separated from the radiating device (2) and the receiver means (11), that the at least one sensor arrangement (5, 5') is exclusively built up from opto-mechanical elements (8, 8', 9, 9', 10, 10') and that for signal transmission between the at least one sensor arrangement (5, 5') and the at least one radiating device (2) or the at least one receiver means (11) optical signal transmitters (12) are provided.

16. Device according to claim 15, **characterized in that** the signal transmitters (12) are constructed as optical waveguides.

17. Device according to one of the claims 12 to 16, **characterized in that** the at least one sensor arrangement (5, 5') has at least one first imaging optics with at least one first diaphragm (10, 10') for irradiating at least one fluid volume (1, 1') and whose diaphragm aperture (10, 10a') is constructed with convex edges (10b, 10b'), more particularly in T or H-shaped manner.

18. Device according to claim 17, **characterized in that** the at least one sensor arrangement (5, 5') has at least one second imaging optics (7, 7') with at least one second diaphragm (10, 10') positioned for observing at least part of the irradiated fluid volume (1, 1').

19. Device according to claim 18, **characterized in that** the diaphragm aperture (10a, 10a') of the second diaphragm (10, 10') is constructed with convex edges (10b, 10b') and in particular in T or H-shaped manner.

20. Device according to claim 19, **characterized in that** at least one second diaphragm (10, 10') and at least one second imaging optics (7, 7') are arranged at a finite angle to a radiating device for the observation of the irradiated fluid volume (1, 18).

21. Device according to claim 20, **characterized in that** the angle is approximately 90°.

22. Device according to one of the claims 12 to 21, **characterized in that** in the case of several waveguides (12) substantially the same radiation intensity can be coupled in.

23. Device according to one of the claims 12 to 22, **characterized in that** with the at least one measuring volume (1, 1') are associated in different spatial directions at least two reception imaging optics (7, 8).

24. Device according to one of the claims 12 to 22, **characterized in that** the at least one receiver means (11) can be operated in a time multiplex.

25. Device according to claim 24, **characterized in that** a beam interruption device (15) is positioned upstream of a signal beaming in opening (14) of receiver means (11).

26. Device according to claim 25, **characterized in that** the beam interruption device (15) is constructed as a circular disk rotatable about an axis (A) perpendicular to its surface and having an opening (16) spaced from a circle centre.

27. Device according to claim 26, **characterized in that** a plurality of optical waveguides (12) is so placed on a side of the beam interruption device (15) remote from the receiver means (11) that on rotating the beam interruption device (15) during each time unit only one radiation of a single optical waveguide (12) can be irradiated into the receiver means (11).

28. Device according to one of the claims 12 to 27, **characterized in that** a fluid flow (1) is successively passed through at least two sensor arrangements (5, 5') between which is provided a heating device (18) for heating the fluid flow (1).

29. Device according to claim 28, **characterized in that** the heating device (18) can lead to fluid temperatures up to approximately 400°C.

30. Device according to claim 28 or 29, **characterized in that** one or more of the at least two sensor arrangements (5, 5') can be heated.

31. Device according to claim 30, **characterized in that** temperatures up to approximately 250°C can be reached in the sensor arrangements (5, 5').

## Revendications

1. Procédé de mesure de propriétés de particules dans un fluide par détection d'un rayonnement électromagnétique diffusé par des particules individuelles dans au moins un volume de mesure, le volume de mesure étant éclairé par un dispositif d'éclairage présentant au moins une source de rayonnement disposée devant un miroir concave, **caractérisé en ce que** l'on découple aux fins de transmission au moins deux rayons de lumière provenant du dispositif d'éclairage au moyen de systèmes optiques de caméra inclinés vers l'axe de symétrie du miroir concave.

2. Procédé selon la revendication 1, **caractérisé en ce que** la mesure s'effectue de façon structurellement séparée d'au moins un dispositif d'irradiation et d'au moins un dispositif de réception dans au moins un système de capteur parcouru par un courant de fluide contenant les particules à mesurer, **en ce que** dans l'au moins un système de capteur, on forme un signal à recevoir dans le dispositif de réception en utilisant exclusivement des éléments opto-électriques, et **en ce que** des signaux sont transmis entre l'au moins un système de capteur et l'au moins un dispositif d'irradiation ou de l'au moins un dispositif de réception au moyen de transmetteurs optiques de signaux.

3. Procédé selon la revendication 2, **caractérisé en ce que** des signaux sont transmis entre le système de capteur et le dispositif d'irradiation ou le dispositif de réception au moyen de fibres optiques.

4. Procédé selon l'une quelconque des revendications précédentes, **caractérisé en ce que** dans l'au moins un système de capteur on éclaire un volume de mesure parcouru par un courant de fluide en utilisant au moins un premier diaphragme dont l'ouverture présente un bord de forme convexe en direction de l'intérieur de l'ouverture du diaphragme.

5. Procédé selon l'une quelconque des revendications précédentes, **caractérisé en ce que** le volume de mesure est examiné en utilisant au moins un deuxième diaphragme, dont l'ouverture présente un bord de forme convexe en direction de l'intérieur de l'ouverture du diaphragme.

6. Procédé selon l'une quelconque des revendications précédentes, **caractérisé en ce qu'**en utilisant une pluralité de systèmes de capteurs de conception différente, on mesure les tailles et/ou les concentrations des particules avec des volumes de mesure différents dans un courant de fluide et/ou dans une pluralité de courants de fluide.

7. Procédé selon l'une quelconque des revendications précédentes, **caractérisé en ce que** l'on irradie une pluralité de volumes de fluides différents avec une intensité sensiblement égale, plus particulièrement en utilisant un dispositif d'irradiation avec lequel on irradie par un rayonnement une surface finie située en dehors du dispositif d'irradiation, qui présente sur l'ensemble de la surface une intensité sensiblement homogène.

8. Procédé selon l'une quelconque des revendications précédentes, **caractérisé en ce que** l'on observe l'au moins un volume de mesure simultanément à partir de différentes directions dans l'espace.

9. Procédé selon l'une quelconque des revendications précédentes, **caractérisé en ce que** l'on chauffe un courant de fluide après son passage dans un premier système de capteur et avant son passage dans un deuxième système de capteur pour évaporer au moins une composante de matière contenue dans le courant de fluide.

10. Procédé selon l'une quelconque des revendications précédentes, **caractérisé en ce qu'**en utilisant un nombre de systèmes de capteurs plus important que le nombre de dispositifs de réception, les dispositifs de réception sont exploités dans un multiplexage temporel.

11. Procédé selon la revendication 10, **caractérisé en ce que** les signaux de capteur arrivant dans un dispositif de réception sont stockés temporellement séparés dans le dispositif de réception par un système d'interruption de rayonnement.

12. Dispositif de mesure de propriétés de particules dans un fluide par détection d'un rayonnement électromagnétique diffusé sur des particules individuelles dans au moins un volume de mesure, comprenant au moins un dispositif d'éclairage présentant une source de rayonnement (3) et un miroir concave (4) et au moins un dispositif de réception ainsi qu'au moins un système ce capteur parcouru par un courant de fluide contenant les particules à mesurer, plus particulièrement conformément au procédé selon l'une quelconque des revendications 1 à 11, **caractérisé en ce qu'**au moins deux fibres optiques (12) avec leurs systèmes optiques de caméra (12a) pour découpler un rayonnement sont disposées dans la zone de la surface annulaire (17), plus particulièrement inclinées vers l'axe de symétrie du miroir concave (4).

13. Dispositif selon la revendication 12, **caractérisé en ce que** la source de rayonnement (3) est une source de lumière blanche.

14. Dispositif selon l'une des revendications 12 ou 13, **caractérisé en ce qu'**un miroir concave (4) est conçu de telle façon et/ou que la source de rayonnement (3) est disposée de telle façon à l'intérieur du miroir concave (4) qu'il existe une surface annulaire (17) parallèle à un plan focal du miroir concave (4), qui contient un courant de rayonnement homogène.

15. Dispositif selon l'une quelconque des revendications 13 à 14, **caractérisé en ce que** l'au moins un système capteur (5,5') est structurellement séparé du dispositif d'irradiation (2) et du dispositif de réception (11), **en ce que** l'au moins un système capteur (5,5') consiste exclusivement en des éléments opto-mécaniques (8,8', 9,9', 10,10') et **en ce que** l'on prévoit des transmetteurs de signaux optiques (12) en vue d'une transmission de signaux entre l'au moins un système capteur (5, 5') et l'au moins un dispositif d'irradiation (2) ou l'au moins un dispositif de réception (11).

16. Dispositif selon la revendication 15, **caractérisé en ce que** les transmetteurs de signaux (12) sont des fibres optiques.

17. Dispositif selon l'une quelconque des revendications 12 à 16, **caractérisé en ce que** l'au moins un système capteur (5,5') présente au moins une première optique de reproduction avec au moins un premier diaphragme (10,10') disposé pour irradier au moins un volume de fluide (1,1'), dont l'ouverture (10a,10a') présente des bords convexes (10b, 10b'), plus particulièrement en forme de "T" ou de "H".

18. Dispositif selon la revendication 17, **caractérisé en ce que** l'au moins un système capteur (5,5') présente au moins une deuxième optique de reproduction (7,7') avec au moins un deuxième diaphragme (10,10') disposé pour observer au moins une partie du volume de fluide (1,1') irradié.

19. Dispositif selon la revendication 18, **caractérisé en ce que** l'ouverture (10a,10') du deuxième diaphragme (10,10') présente des bords convexes (10b,10b'), plus particulièrement en forme de "T" ou de "H".

20. Dispositif selon la revendication 19, **caractérisé en ce qu'**au moins un deuxième diaphragme (10,10') et l'au moins deuxième optique de reproduction (7,7') pour observer le volume de fluide (1,1')irradié sont disposés selon un angle fini par rapport à une direction d'irradiation.

21. Dispositif selon la revendication 20, **caractérisé en ce que** l'angle est d'environ 90°.

22. Dispositif selon l'une quelconque des revendications 12 à 21, **caractérisé en ce qu'**en cas de plusieurs fibres optiques (12), on peut injecter sensiblement une intensité d'irradiation identique.

23. Dispositif selon l'une quelconque des revendications 12 à 22, **caractérisé en ce que** l'on associe à l'au moins un volume de mesure (1,1') au moins deux optiques de reproduction de réception (7,8) dans différentes directions spatiales.

24. Dispositif selon l'une quelconque des revendications 12 à 22, **caractérisé en ce que** l'au moins un dispositif de réception (11) peut être exploité dans un multiplexage temporel.

25. Dispositif selon la revendication 24, **caractérisé en ce qu'**un dispositif d'interruption d'irradiation (15) est disposé devant une ouverture d'entrée de signal (14) du dispositif de réception (11).

26. Dispositif selon la revendication 25, **caractérisé en ce que** le dispositif d'interruption d'irradiation (15) est conformé en disque pouvant pivoter autour d'un axe (A) perpendiculaire à sa surface présentant une ouverture (16) à distance d'un point central de cercle.

27. Dispositif selon la revendication 26, **caractérisé en ce qu'**une pluralité de fibres optiques (12) sont disposées de telle façon sur une face du dispositif d'interruption d'irradiation (15) opposée au dispositif de réception (11) que lorsque le dispositif d'interruption d'irradiation (15) tourne, on ne peut faire pénétrer dans le dispositif de réception (11) qu'une irradiation d'une seule fibre optique (12) par unité de temps.

28. Dispositif selon l'une quelconque des revendications 12 à 27, **caractérisé en ce qu'**un courant de fluide (1) est conduit successivement à travers au moins deux dispositifs capteurs (5,5'), entre lesquels on prévoit à chaque fois un dispositif de chauffage (18) pour chauffer le courant de fluide (1).

29. Dispositif selon la revendication 28, **caractérisé en ce que** le dispositif de chauffage (18) permet d'atteindre des températures de fluide montant jusqu'à environ 400°C.

30. Dispositif selon la revendication 28 ou 29, **caractérisé en ce qu'**on peut chauffer un ou plusieurs des au moins deux dispositifs capteurs (5,5').

31. Dispositif selon la revendication 30, **caractérisé en ce que** l'on peut atteindre dans les dispositifs capteurs (5,5') des températures montant jusqu'à environ 250°C.
